# EUROPÄISCHE PATENTSCHRIFT

(11) **EP 1 848 577 B1**
(45) Veröffentlichungstag und Bekanntmachung des Hinweises auf die Patenterteilung: **07.01.2009**
(21) Anmeldenummer: 06706722.3
(22) Anmeldetag: 07.02.2006
(51) Int. Cl.: B29C 45/66, B29C 45/67, B29C 45/17

(54) **SPRITZGIESSMASCHINE ZUR VERARBEITUNG VON KUNSTSTOFFEN**
INJECTION MOULDING MACHINE FOR PROCESSING PLASTIC MATERIALS
MACHINE DE MOULAGE PAR INJECTION POUR L'USINAGE DE MATIERES PLASTIQUES

(30) Priorität: 11.02.2005 DE 102005006596
(43) Veröffentlichungstag der Anmeldung: 31.10.2007
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2006/001078
(87) Internationale Veröffentlichungsnummer: WO 2006/084668

(56) Entgegenhaltungen:
- EP-A- 0 554 068
- EP-A- 1 285 739
- DE-A1- 10 122 599
- US-A- 2 266 129
- US-A- 5 297 897
- US-A- 5 306 136
- US-B1- 6 402 497
- US-B1- 6 821 105
- PATENT ABSTRACTS OF JAPAN Bd. 1996, Nr. 07, 31. Juli 1996 (1996-07-31) -& JP 08 057896 A (FANUC LTD), 5. März 1996 (1996-03-05) -& DATABASE WPI Section Ch, Week 199619 Derwent Publications Ltd., London, GB; Class A32, AN 1996-183342 XP002380106 & JP 08 057896 A (FANUC LTD) 5. März 1996 (1996-03-05)

## Beschreibung

### Gebiet der Erfindung

Die Erfindung betrifft eine Spritzgießmaschine zur Verarbeitung von Kunststoffen und anderer plastifizierbarer Massen nach dem Oberbegriff des Anspruches 1.

### Stand der Technik

Eine derartige Formschließeinheit ist aus der DE 101 22 599 A1 bekannt. Über einen Kniehebelmechanismus , der auf Seite der Spritzgießeinheit angeordnet ist, wird die Spritzgießform samt ihren am stationären Formträger geführten Holmen in Formschluss gezogen. Der Zugang zur Spritzgießform ist durch die Holme beeinträchtigt.

Eine zur DE 101 22 599 A1 vergleichbare Lösung ebenfalls mit Holmen ist im Bereich des Spritzpressens aus der US-A 5,297,897 bekannt.

Die Verwendung von Bügeln als Kraftübertragungselement an sich ist bereits seit langen aus der US-A 2,266,129 bekannt, jedoch nicht seine Anlenkung an der beweglichen Abstützplatte.

Aus der DE 69 12 191 U1, insbesondere Figur 1 ist eine Formschließeinheit bekannt, bei der der stationäre Formträger zugleich die Antriebseinheit für die Formschließeinheit trägt. Über diese Antriebseinheit wird beim Formschluss der bewegliche Formträger an den stationären Formträger herangezogen,

Aus der DE 43 13 473 C2 ist eine Formschließeinheit bekannt, bei der über einen Y-Kniehebelmechanismus der bewegliche Formträger auf einen stationären Formträger zu und von diesem weg bewegt wird. Die Formschließeinheit ist auf einem Maschinengestell über eine Lagerung eines Kraft übertragenden Elements abgestützt. Das Kraft übertragende Element ist als Bügel um den Formhohlraum herumgeführt, um einen freien Zugang zum Formspannraum zu ermöglichen, jedoch an den beiden Enden der Formschließeinheit angelenkt, so dass es außerhalb der zentralen Formschließeinheit bei jedem Zyklus verformt wird.

### Offenbarung der Erfindung

Ausgehend von diesem Stand der Technik liegt der vorliegenden Erfindung die Aufgabe zugrunde, eine Platz sparende Spritzgießmaschine zu schaffen, die den Aufbau eines Freiraumsystems im Werkzeugbereich ermöglicht.

Diese Aufgabe wird durch eine Spritzgießmaschine mit den Merkmalen des Anspruches 1 gelöst.

Das Maschinengestell selbst wird als stationärer Formträger ausgebildet, gegenüber dem der gesamte Formschluss einschließlich Abstützelement beweglich ist. Dies erhöht zwar die zu bewegenden Massen, erlaubt aber gleichzeitig insbesondere bei vertikaler Anordnung einen Platz sparenden Aufbau. Dadurch kann die Spritzgießmaschine zur Integration des Spritzgießprozesses als Einzelprozess in eine Summe von Fertigungsschritten leichter eingegliedert werden. Dies ist insbesondere bei der Herstellung komplexer Bauelemente wie bei der Kabelendengestaltung erforderlich, wie sie beispielsweise als Steckverbinder oder Dichtungssysteme im Automobilbereich oder als Spritzsysteme in der Verarbeitung zum Beispiel von Endlosmaterial wie elektrischer Kontakte eingesetzt werden. Als Kraftübertragungselement wird ein Bügel eingesetzt. Damit lässt sich die Spritzgießmaschine noch besser in bestehende Fertigungssysteme einbinden, da ein Durchlauf des von anderen Prozessen kommenden Materials durch den Werkzeugbereich ohne weiteres möglich ist. Gleichzeitig kann die Länge des Bügels kurz gehalten werden, so dass es zu geringeren außermittigen Dehnungen kommt.

Weitere Vorteile ergeben sich aus den weiteren Ansprüchen und der folgenden Beschreibung.

### Kurzbeschreibung der Figuren

Im Folgenden wird die Erfindung anhand der beigefügten Figuren näher erläutert. Es zeigen:
- Fig. 1: eine Spritzgießmaschine mit abgeschnittenem Spritzgießeinheiten in einer perspektivischen Seitenansicht,
- Fig. 2, 2a: die Spritzgießmaschine nach Fig. 1 in einer perspektivischen Ansicht von hinten und von vorne,
- Fig. 3: die Spritzgießmaschine nach Fig. 1 in Seitenansicht,
- Fig. 4: die Spritzgießmaschine nach Fig. 1 in einer Ansicht von vom,
- Fig. 5: die Spritzgießmaschine nach Fig. 1 in Draufsicht,
- Fig. 6: eine Ansicht einer Spritzgießmaschine gemäß Fig. 3 in einer weiteren Ausführungsform,
- Fig. 7: die Spritzgießmaschine nach Fig. 6 in einer Ansicht von vorne ohne Spritz-gießform und ohne Maschinengestell.

### Ausführliche Beschreibung bevorzugter Ausführungsbeispiele

Die Erfindung wird jetzt beispielhaft unter bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Bevor die Erfindung im Detail beschrieben wird, ist darauf hinzuweisen, dass sie nicht auf die jeweiligen Bauteile der Spritzgießmaschine oder die erläuterte Vorgehensweise beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn in der Beschreibung und in den Ansprüchen die Einzahl oder unbestimmte Artikel verwendet werden, beziehen sich diese auch auf die Mehrzahl dieser Elemente, solange nicht der Gesamtzusammenhang eindeutig etwas anderes deutlich macht. Dasselbe gilt in umgekehrter Richtung.

Die in den Figuren dargestellte Spritzgießmaschine dient zur Verarbeitung von Kunststoffen und anderer plastifizierbarer Massen wie pulvriger oder keramischer Massen. In den Zeichnungen ist sie als eine vertikal arbeitende Maschine dargestellt, sodass die Schließrichtung s-s vertikal verläuft. Die Maschine kann jedoch ebenfalls horizontal arbeitend eingesetzt werden. Die Maschine ist insbesondere dafür vorgesehen, in andere Fertigungsprozesse integriert zu werden. In diesem Fall ist die Spritzgießtechnik lediglich ein Teilschritt eines Fertigungsprozesses, wie er insbesondere zur Herstellung komplexer Bauelemente wie der Kabelendengestaltung zum Beispiel bei der Herstellung von Steckverbindern oder Dichtungssystemen im Fahrzeugbau oder als Spritzsysteme bei der Verarbeitung zum Beispiel von Endlosbandmaterial für elektrische Kontakte erforderlich ist.

Auf einem stationären Maschinengestell 10 sind die Elemente der Spritzgießmaschine angeordnet, die insbesondere wenigstens eine Spritzgießeinheit S, S' und eine Formschließeinheit F umfassen. Im Gebrauchszustand sind Spritzgießeinheit S und Formschließeinheit F mit dem Maschinengestell 10 in Wirkverbindung. Die Formschließeinheit F umfasst ein stationäres Element und einen demgegenüber an Führungselementen 11 geführten, in Schließrichtung s-s in und außer Formschluss beweglichen Formträger 12. Die Formschließeinheit F steht zur Bewegung des beweglichen Formträgers 12 mit dem stationären Element als auch über wenigstens ein Kraftübertragungselement mit dem beweglichen Formträger 12 in Wirkverbindung. Das Maschinengestell 10 oder zumindest ein Teil davon ist zugleich als stationäres Element beziehungsweise als stationärer Formträger 13 ausgebildet. Im Ausführungsbeispiel ist dies die horizontale Oberseite des Maschinengestells 10. Dieses Maschinengestell ist damit das einzige stationäre Element, gegenüber dem sämtliche anderen Elemente zumindest der Formschließeinheit als beweglicher Formschluss beweglich und vorzugsweise auch an den Führungselementen 11 geführt sind. Die Führungselemente 11 sind im Ausführungsbeispiel stationäre Führungsholme die zugleich auch als Stützholme für die oberen Teile der Spritzgießmaschine dienen. Je nach Ausführungsform können anstelle dieser Führungen aber auch Linearführungen vorgesehen sein, bei denen Führungsschuhe in Führungsleisten eingreifen. Diese Führungselemente 11 müssen nicht stationär sein. Sie können ebenfalls mit dem Formschluss bewegt werden, wenn sie z.B. ihrerseits unten in Hülsen gleitend geführt sind.

Die Formschließeinheit F greift mit ihrem einen Ende am stationären Element an und ist mit ihrem anderen Ende an einer Abstützplatte 14 gelagert, die entlang der Führungselemente im Ausführungsbeispiel in vertikaler Richtung bei Betätigung der Antriebseinrichtung A bewegt wird. Mit diesem Abstützelement 14 ist wenigstens ein Kraftübertragungselement verbunden, das am anderen Ende mit dem beweglichen Formträger 12 verbunden ist, der ebenfalls an den Führungselementen 11 geführt ist. In zeichnerisch nicht dargestellter Weise können auch die Kraftübertragungselemente bedarfsweise an den Führungselementen 11 geführt werden. Anstelle der Führungselemente 11 könnten für den beweglichen Formträger auch zusätzliche Führungselemente vorgesehen sein.

Bei einer vertikalen Anordnung gemäß Ausführungsbeispiel führt dieser Aufbau zwar dazu, dass der gesamte Formschluss und gegebenenfalls auch die Spritzgießeinheit S bei jedem Zyklus bewegt werden muss, andererseits wird damit aber eine feststehende, in einen Fertigungsprozess leicht zu integrierende freie Fläche als horizontaler Fixpunkt durch die Oberseite des Maschinengestells 10 bzw. in der Trennebene des Werkzeugs geschaffen, auf die die restlichen Fertigungsprozesse leichter auszurichten sind.

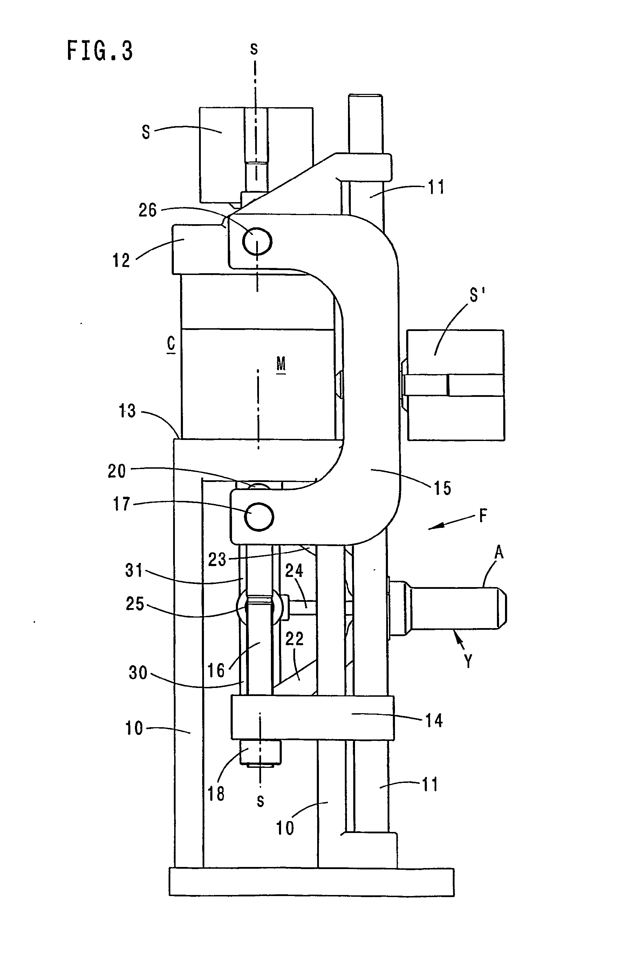

Im Ausführungsbeispiel umfasst die Formschließeinheit F einen Kniehebelmechanismus Y als Antriebsmechanismus, es könnten jedoch auch andere Antriebsmechanismen wie zum Beispiel hydraulische, elektrische oder auch Kombinationen derartiger Antriebe oder gar Linearantriebe als Antrieb vorgesehen werden. Der Aufbau des Kniehebelmechanismus wird am deutlichsten aus Fig. 3. Der Kniehebelmechanismus Y ist einenends am Maschinengestell 10 oder am stationären Element angelenkt. Im Ausführungsbeispiel erfolgt die Anlenkung unterhalb des stationären Formträgers 13, also unterhalb der Oberseite des Maschinengestells. Anderenends ist der Kniehebelmechanismus Y mit der mit dem Kraftübertragungselement verbundenen, in Schließrichtung s-s beweglichen Abstützplatte 14 gelenkig verbunden. Das Abstützelement 14 ist an den Führungselementen 11 geführt, die im oberen Bereich dem beweglichen Formträger 12 ebenfalls als Führung dienen.

Der Y-Kniehebel besitzt ein Verbindungselement 19, an dem die Antriebseinrichtung A zum Beispiel in Form eines Hohlwellenmotors angeordnet ist. Dieses Verbindungselement ist über zwei Anlenkungspunkte 27,28 mit Haltelementen 22,23 verbunden, die an den Anlenkungspunkten 20,21 der Kniehebel 30,31 des Kniehebelmechanismus Y befestigt sind. Diese Anlenkungspunkte sind die Anlenkungspunkte am stationären Element und an der Abstützplatte 14. Über die Haltelemente 22,23 ist damit die Antriebseinrichtung A gelenkig aufgehängt und quer zur Schließrichtung s-s angeordnet und vom Kniehebemechanismus Y frei beweglich gehalten.

Wird die Antriebseinrichtung A betätig, so wird dadurch das Antriebselement 24 quer zur Schließrichtung s-s bewegt, was bei Formschluss zur Strecklage führt, wie in den Figuren dargestellt. Wird das Antriebselement 24 in Fig. 3 nach rechts zurück gezogen, wird dadurch auch der Anlenkpunkt 25 nach rechts bewegt, was zu einer Verkürzung des Abstandes zwischen den Anlenkungspunkten 20,21 führt. Dadurch werden Abstützelement 14, Verbindungselement 16, Kraftübertragungselement (Bügel 15) sowie Spritzgießeinheit S nach oben bewegt, was zur Öffnung der Spritzgießform führt.

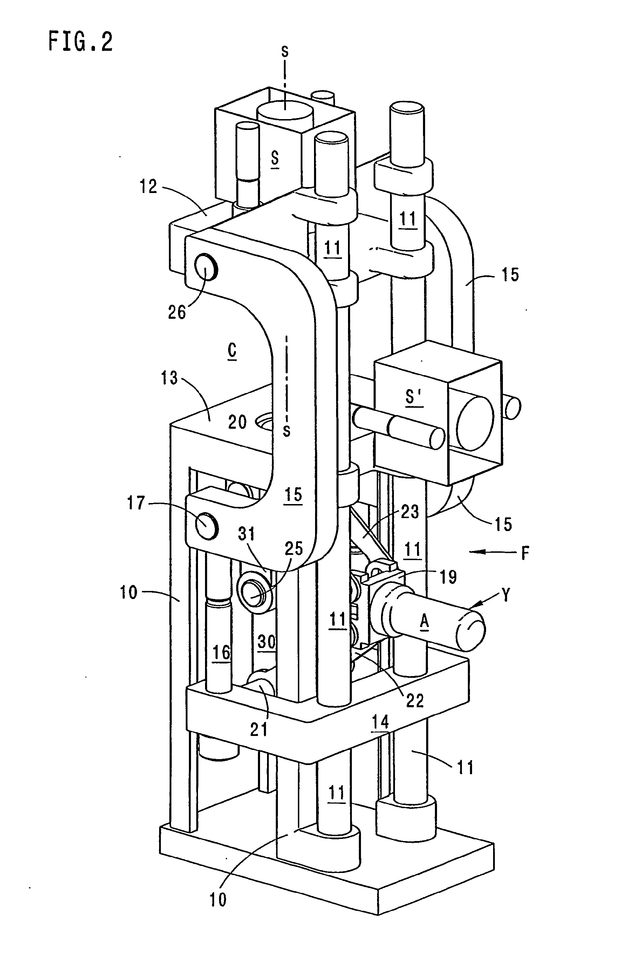

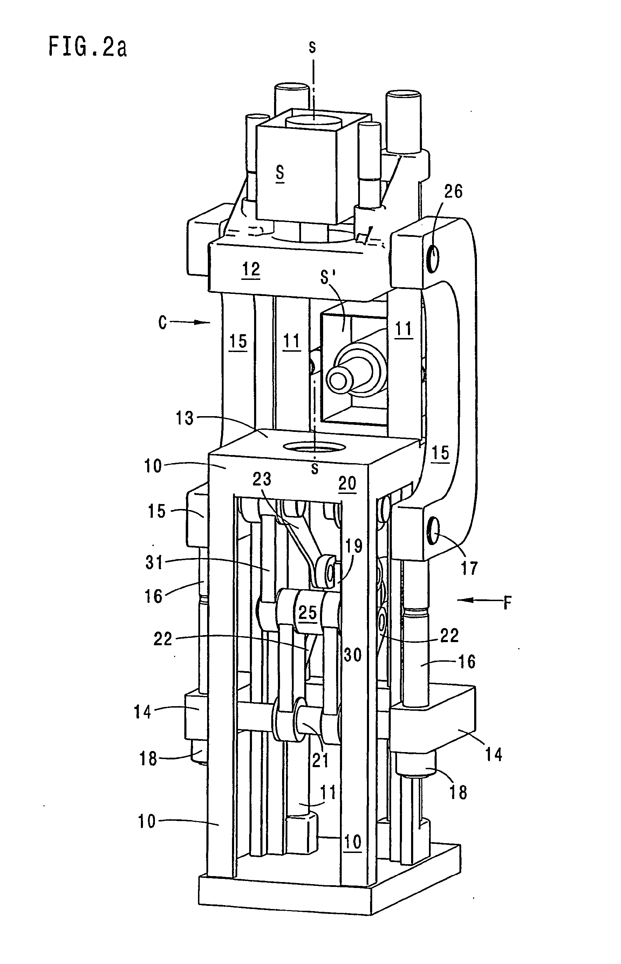

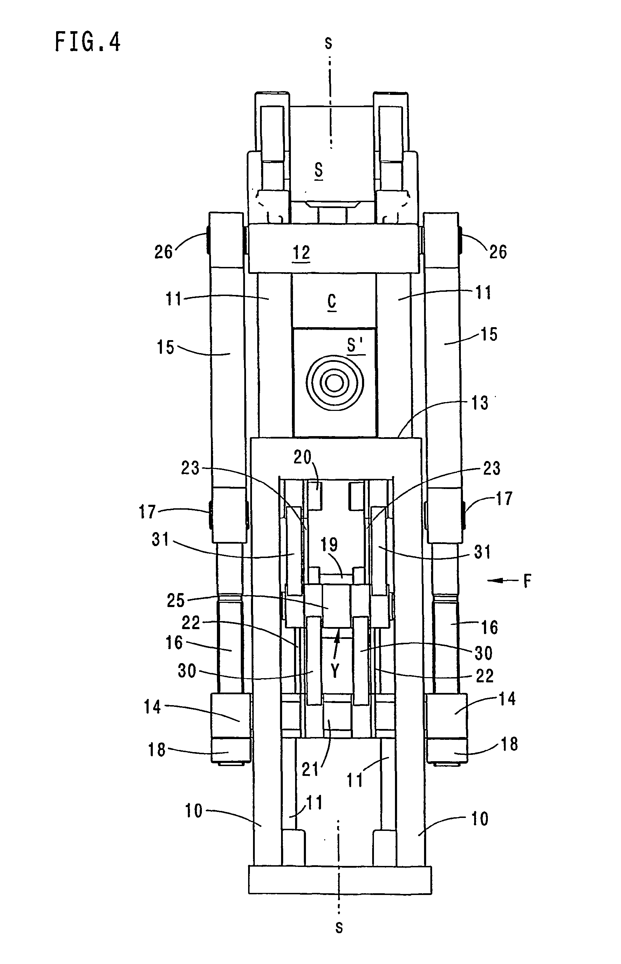

Fig.2a und Fig.4 zeigen, dass ausgehend von der Abschlussplatte 14 alle oberen Bauteile nicht mehr in das Maschinengestell 10 eingreifen, sondern auf Abstand dazu geführt sind. Dies erlaubt die beschriebene Bewegung des Formschlusses beim Öffnen der Spritzgießform nach oben. Wie Eingangs erläutert, schließt dieser Aufbau jedoch nicht die horizontale Anordnung der Spritzgießmaschine aus. Bedarfsweise können jedoch die Bügel 15 auch so angeordnet sein, dass sie unten in das Maschinengestell 10 eingreifen und dennoch frei beweglich sind. Dies ist insbesondere dann der Fall, wenn z.B. die Führungselemente 11 weiter nach außen verlegt werden, so dass in der Mitte der Raum für die Bügel 15 entsteht. Eine solche Anordnung trägt auch zu einer möglichst mittigen Kraftübertragung bei.

Das Kraftübertragungselement ist ein gesondertes, durch die im Wesentlichen bei geschlossener Gießform M auftretenden Kräfte verformbarer Bügel 15. Der Bügel 15 wird um den Formspannraum C herum geführt, der zwischen beweglichem Formträger 12 und stationärem Formträger 13 gebildet ist. Das Kraftübertragungselement wird hier durch zwei beidseits des Formspannraums angeordnete Bügel 15 gebildet, die einerseits am beweglichen Formträger 12 und andererseits an einem Verbindungselement 16 angelenkt sind, das mit der Abstützplatte 14 verbunden ist. Die Länge des Verbindungselements 16 ist durch eine Formhöhenverstelleinrichtung 18 veränderlich, um dadurch eine Anpassung des Kniehebels an unterschiedliche Formhöhen, also das Baumaß der im Formspannraum aufnehmbaren Werkzeuge in Schließrichtung s-s anzupassen. Wird die Formhöhenverstelleinrichtung betätigt, können die Teile des Verbindungselements 16 in Längsrichtung zueinander verstellt werden. Eine derartige Formhöhenverstelleinrichtung ist dem Fachmann bekannt, sodass sie hier nicht weiter beschrieben wird.

Die Spritzgießeinheiten, von denen in den Figuren zwei schematisch angedeutet sind, können auf unterschiedliche Weise an der Formschließeinheit F der Spritzgießmaschine angeordnet werden. Eine Möglichkeit besteht darin die Spritzgießeinheit S oben am beweglichen Formträger 12 anzuordnen und mit dem beweglichen Formträger 12 zu bewegen. Eine andere Möglichkeit besteht darin, zum Beispiel zum Einspritzen in die Trennebene des Werkzeugs M die Spritzgießeinheit S' zwischen den Führungselementen 11 anzuordnen, wobei sie auch feststehend an diesen Führungselementen befestigt werden kann. Falls mehrere Spritzgießeinheiten auf grund des Einsatzzweckes erforderlich sind, können diese Anordnungen auch kombiniert werden.

Das Verformungselement, also der Bügel 15 ist nicht unmittelbar, sondern nur mittelbar über seine Lagerstellen geführt. Diese Lagerstellen sind einerseits der Anlenkungspunkt 17 zwischen Verbindungselement 16 und Bügel 15 sowie andererseits der Anlenkungspunkt 26 am beweglichen Formträger 12. Diese Anlenkungspunkte 17,26 sind so angeordnet, dass der Bügel zentrisch angelenkt ist, also in der Schließachse oder in einer durch die Schließachse gehenden Ebene. Dadurch ergibt sich eine für die Präzision der Maschine vorteilhafte mittige Kraftübertragung. Im unteren stationären Maschinengestell sind alle Führungselemente 11 sowohl für die Kniehebelbewegung als auch für die Führung des Kraftübertragungselementes enthalten. Die Formhöheneinstellung und somit auch Schließkrafteinstellung erfolgt durch ein separates Spindelsystem zwischen dem Anlenkungspunkt 17 und der beweglichen Anlenkung des Kniehebelsystems unten.

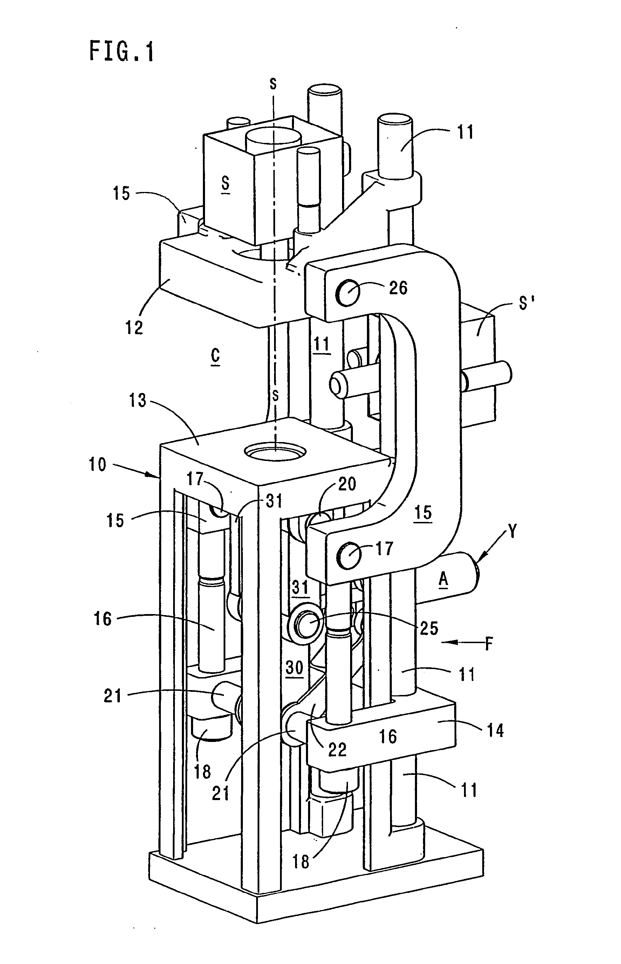

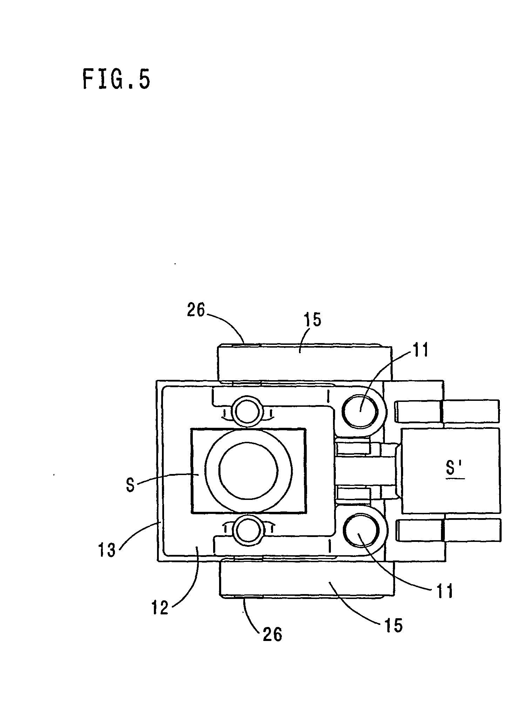

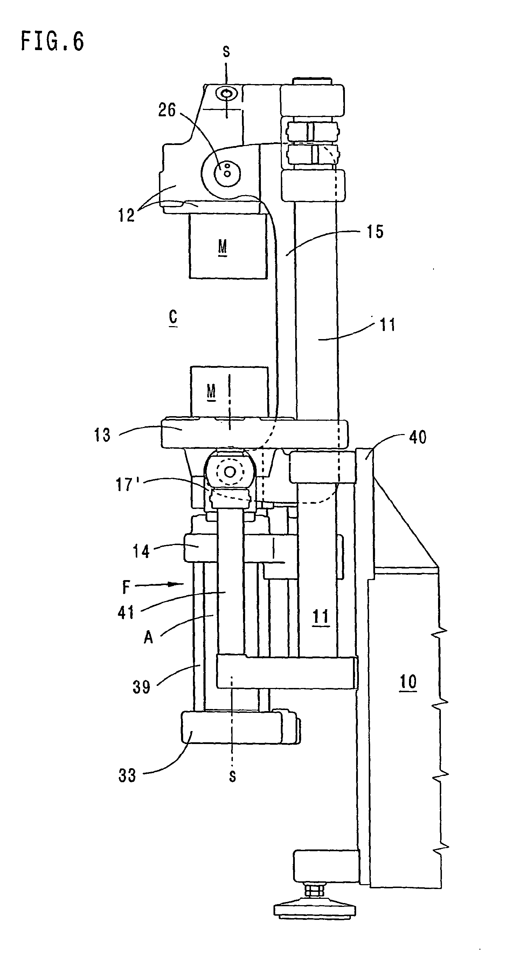

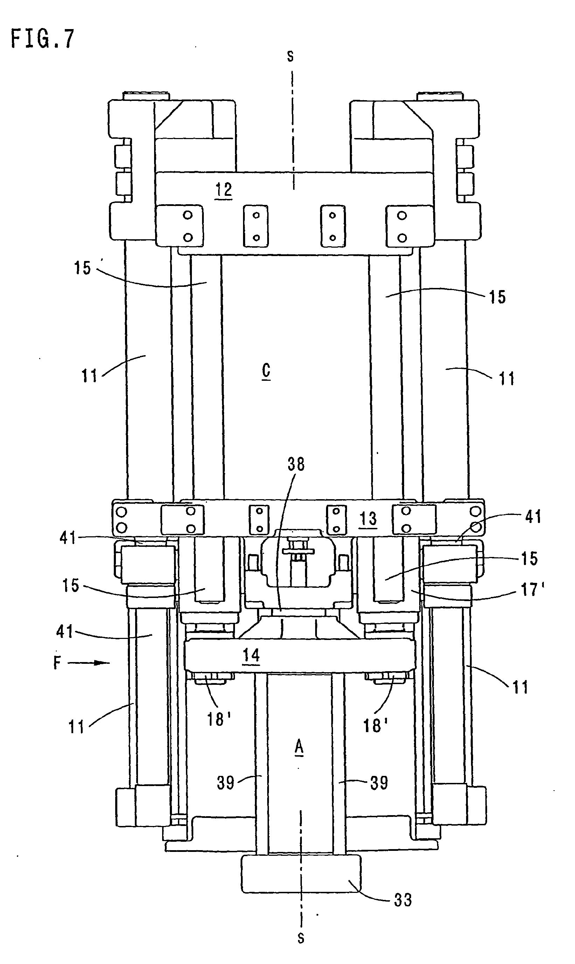

Die Figuren 6 und 7 zeigen ein weiteres Ausführungsbeispiel der Spritzgießmaschine, wobei die Elemente in beiden Ausführungsbeispielen im Wesentlichen mit denselben Bezugszeichen bezeichnet sind. Die wesentlichen Unterschiede zum ersten Ausführungsbeispiel der Fig. 1 bis 5 beruhen auf der Art des Antriebs A, hier hydraulisch, dort Kniehebelmechanismus und der Anlenkung am Maschinengestell. Während im ersten Ausführungsbeispiel der Y-Kniehebel seitlich in das Maschinengestell eingreift, ist im zweiten Ausführungsbeispiel die Formschließeinheit F an dem in Fig. 6 rechts angedeuteten Maschinengestell 10 über einen Bügel 40 angebaut, wobei an dieser Stelle auch ein bekannter, zeichnerisch nicht dargestellter Schwenkmechanismus vorgesehen sein kann, um die Formschließeinheit wahlweise vertikal - wie in den Fig. dargestellt - oder horizontal zu betreiben. Gleichwohl ist auch hier der stationäre Formträger der Fixpunkt, gegenüber dem sich die gesamte Formschließeinheit bei Betätigung des hydraulischen Antriebs A bewegt.

Eine Endplatte 33 des Zylinders der hydraulische Antriebseinheit A ist mit der Abstützplatte 14 über Bolzen 39 verspannt. Die Lage der Antriebseinheit gegenüber der Abstützplatte und gegenüber den Formträgem ist zur Erzielung einer Plattenparallelität von stationärem Formträger 13 und beweglichem Formträger 12 über Justiereinrichtungen 18' einstellbar. Wird die Antriebseinheit betätigt, bewegt sie mit der Abstützplatte 14 den Anlenkungspunkt 17' und bewegt damit den Bügel 15 und den beweglichen Formträger 12. Die Abstützplatte bewegt sich bei dieser Bewegung entlang der Führung 41 und nimmt sozusagen Anlenkungspunkt 17', Bügel 15 und beweglichen Formträger 12 mit. Der Anlenkungspunkt 38 zeigt die Verbindung der Kolbenstange der Antriebseinheit A mit dem stationären Formträger 13.

Des weiteren liegen bei diesem Ausführungsbeispiel die den Formspannraum C umgebenden Bügel 15 innen und die Führungselemente 11 außen.

### Bezugszeichenliste

- 10: Maschinengestell
- 11: Führungselement
- 12: beweglicher Formträger
- 13: stationärer Formträger
- 14: Abstützplatte
- 15: Bügel
- 16: Verbindungselement
- 17, 17': Anlenkung 15 an 16
- 18: Formhöhenverstelleinrichtung
- 18': Justiereinrichtung
- 19: Verbindungselement für Antriebseinrichtung A
- 20,21: Anlenkungspunkt für Y
- 22,23: Halteelement für A
- 24: Antriebselement
- 25: Anlenkpunkt für 24
- 26: Anlenkpunkt 12 zu 15
- 27,28: Anlenkungspunkte
- 30,31: Kniehebel
- 33: Endplatte
- 38: Kolbenstange
- 39: Bolzen
- 40: Bügel
- 41: Führung

- A: Antriebseinrichtung
- C: Formspannraum
- F: Formschließeinheit
- M: Gießform (Fig.3, 6)
- S, S': Spritzgießeinheit
- Y: Kniehebelmechanismus
- s-s: Schließrichtung

## Patentansprüche

1. Spritzgießmaschine zur Verarbeitung von Kunststoffen und anderer plastifizierbarer Massen mit
- einem Maschinengestell (10),
- wenigstens einer Spritzgießeinheit (S, S') und einer Formschließeinheit (F), die im Gebrauchszustand beide mit dem Maschinengestell (10) in Wirkverbindung stehen,
- wobei der Formschließeinheit (F) das Maschinengestell (10) oder zumindest ein Teil davon als stationärer Formträger (13) zugeordnet ist und ein beweglicher Formträger (12) zugeordnet ist, der gegenüber dem stationärenFormträger (13) an Führungselementen (11) geführt, in Schließrichtung (s-s) in und außer Formschluss bewegbar ist, wobei gegenüber dem stationären Formträger (13) die weiteren Teile der Formschließeinheit (F) beim Formschtuss beweglich sind, und
- wobei die Formschließeinheit (F) eine Antriebseinheit zur Bewegung des beweglichen Formträgers (12) aufweist und dazu mit dem stationären Formträger (13) und über wenigstens ein Kraftübertragungselement mit dem beweglichen Formträger (12) in Wirkverbindung steht,
- wobei die Antriebseinheit (A) einenends am Maschinengestell (10) oder dem stationären Formträger (13) angelenkt ist und anderenends mit einer mit dem Kraftübertragungselement verbundenen, in Schließrichtung (s-s) beweglichen Abstützplatte (14) gelenkig verbunden ist,
**dadurch gekennzeichnet, dass** das Kraftübertragungselement wenigstens ein gesonderter, durch die Kräfte im wesentlichen bei geschlossener Gießform (M) verformbarer Bügel (15) ist.

2. Spritzgießmaschine nach Anspruch 1, **dadurch gekennzeichnet, dass** das Maschinengestell auf einer horizontalen Fläche den stationären Formträger (13) für eine vertikal arbeitende Formschließeinheit (F) ausbildet.

3. Spritzgießmaschine nach Anspruch 1, **dadurch gekennzeichnet, dass** die Schließrichtung (s-s) vertikal oder horizontal ist.

4. Spritzgießmaschine nach einem der vorhergehenden Ansprüche, **dadurch gekennzeichnet, dass** der wenigstens eine Bügel (15) um einen zwischen beweglichen Formträger (12) und stationärem Formträger (13) gebildeten Formspannraum (C) herum geführt ist.

5. Spritzgießmaschine nach einem der vorhergehenden Ansprüche, **dadurch gekennzeichnet, dass** das Kraftübertragungselement beidseits eines zwischen beweglichem Formträger (12) und stationärem Formträger (13) gebildeten Formspannraum (C) einerseits am beweglichen Formträger (12) und andererseits an einem Verbindungselement (16) zur Abstützplatte (14) angelenkt ist.

6. Spritzgießmaschine nach Anspruch 5, **dadurch gekennzeichnet, dass** der Abstand zwischen Abstützplatte (14) und dem Anlenkungspunkt (17) des Verbindungselements (16) am Kraftübertragungselement mittels einer Formhöhenverstelleinrichtung (18) veränderlich ist.

7. Spritzgießmaschine nach einem der vorhergehenden Anspruch, **dadurch gekennzeichnet, dass** der bewegliche Formträger (12) an gesonderten Führungselementen (11) geführt ist, die mit dem Maschinengestell (10) verbunden sind

8. Spritzgießmaschine nach einem der vorhergehenden Ansprüche, **dadurch gekennzeichnet, dass** die vorzugsweise als Stützholme ausgebildeten Führungselemente (11) zugleich der Abstützplatte (14) und/oder dem Kraftübertragungselement als Führung bei Bewegung in Schließrichtung (s-s) dienen.

9. Spritzgießmaschine nach einem der vorhergehenden Ansprüche, **dadurch gekennzeichnet, dass** ein Verbindungselement (19) für eine Antriebseinrichtung (A) über zwei an Anlenkungspunkten (20,21) eines Kniehebelmechanismus (Y) am stationären Formträger (13) und an der Abstützplatte (14) angelenkte Halteelemente (22,23) gelenkig aufgehängt ist, an denen die Antriebseinrichtung (A) befestigt ist und quer zur Schließrichtung (s-s) angeordnet, vom Kniehebelmechanismus (Y) frei beweglich gehalten mit einem Antriebselement (24) am Anlenkungspunkt (25) angreift.

10. Spritzgießmaschine nach einem der Ansprüche 1 bis 8, **dadurch gekennzeichnet, dass** die Antriebseinheit eine hydraulische Antriebseinheit ist, die an der Abstützplatte (14) über eine Justiereinrichtung (18') gelagert ist.

11. Spritzgießmaschine nach einem der vorhergehenden Ansprüche, **dadurch gekennzeichnet, dass** die Spritzgießeinheit (S) mit dem beweglichen Formträger (12) zur gemeinsamen Bewegung verbunden ist.

12. Spritzgießmaschine nach einem der vorhergehenden Ansprüche, **dadurch gekennzeichnet, dass** die Spritzgießeinheit (S') zum Einspritzen in die Trennebene zwischen den Führungselementen (11) anbringbar ist.

## Claims

1. Injection moulding machine for processing plastics materials and other plasticisable compounds, the machine comprising
- a machine frame (10),
- at least one injection moulding unit (S, S') and a mould closing unit (F), both of which are operationally connected to the machine frame (10) in operating state,
- wherein the machine frame (10) or at least a part thereof is associated with the mould closing unit (F) as a stationary mould carrier (13) and there is provided a moveable mould carrier (12), which, relative to the stationary mould carrier (13), is guided at guide elements (11), is movable in a closing direction (s-s) in and out of mould closure, wherein additional parts of the mould closing unit (F) are movable relative to the stationary mould carrier (13) during mould closure, and
- wherein the mould closing unit (F) comprises a drive unit for displacing the moveable mould carrier (12) and, for this purpose, is in operational connection with the stationary mould carrier (13) and, via at least one force-transmitting element, with the moveable mould carrier (12),
- wherein the drive unit (A) is pivotally mounted at one end to the machine frame (10) or the stationary mould carrier (13) and is pivotally connected at the other end to a support plate (14), which is connected to the force-transmitting element and is movable in the closing direction (s-s),
**characterised in that** the force-transmitting element is at least one separate bracket (15), which is deformable by forces substantially occurring when the injection mould assembly (M) is closed..

2. Injection moulding machine according to claim 1, **characterised in that** the machine frame, on a horizontal face, forms the stationary mould carrier (13) for a vertically operating mould closing unit (F).

3. Injection moulding machine according to claim 1, **characterised in that** the direction of closing (s-s) is vertical or horizontal.

4. Injection moulding machine according to one of the preceding claims, **characterised in that** the at least one bracket (15) is guided around a mould clamping space (C) that is formed between the moveable mould carrier (12) and the stationary mould carrier (13).

5. Injection moulding machine according to one of the preceding claims, **characterised in that** the force transmitting element, on both sides of a mould claming space (C) that is formed between the moveable mould carrier (12) and the stationary mould carrier (13), is pivotally mounted on one side at the moveable mould carrier (12) and on the other side at a connecting element (16) to the support plate (14).

6. Injection moulding machine according to claim 5, **characterised in that** the distance between the support plate (14) and the pivotal connecting point (17) of the connecting element (16) at the force transmitting element is variable by means of a mould height adjusting device (18).

7. Injection moulding machine according to one of the preceding claims, **characterised in that** the moveable mould carrier (12) is guided at separate guide elements (11), which are connected to the machine frame (10).

8. Injection moulding machine according to one of the preceding claims, **characterised in that** the guide elements (11), which are preferably in the form of support columns, at the same time act as guide means for the support plate (14) and/or the force transmitting element during movement in the closing direction (s-s).

9. Injection moulding machine according to one of the preceding claims, **characterised in that** a connecting element (19) for a drive device (A) is suspended in a pivotable manner by means of two retaining elements (22, 23) that are pivotally mounted at pivotal connecting points (20, 21) of a toggle mechanism (Y) at the stationary mould carrier (13) and at the support plate (14), to which retaining elements the drive device (A) is secured and, disposed transversely relative to the direction of closing (s-s), retained by the toggle mechanism (Y) so as to be freely movable, engages a drive element (24) at the pivotal connecting point (25).

10. Injection moulding machine according to one of claims 1 to 8, **characterised in that** the drive unit is a hydraulic drive unit, which is mounted at the support plate (14) by means of an adjusting device (18').

11. Injection moulding machine according to one of the preceding claims, **characterised in that** the injection moulding unit (S) is connected to the moveable mould carrier (12) for common movement.

12. Injection moulding machine according to one of the preceding claims, **characterised in that** the injection moulding unit (S') is mountable for injecting into the separating plane between the guide elements (11).

## Revendications

1. Machine de moulage par injection pour l'usinage de matières plastiques et d'autres matériaux plastifiables, comportant
- un bâti de machine (10)
- au moins une unité de moulage par injection (S, S') et une unité de fermeture de moule (F), qui en utilisation, sont toutes les deux en liaison de fonctionnement avec le bâti de machine (10) ;
- étant associés, à l'unité de fermeture de moule (F), le bâti de machine (10) ou au moins une partie de ce dernier, en tant que support de moule stationnaire (13), et un support de moule déplaçable (12) qui est guidé sur des éléments de guidage (11) par rapport au support de moule stationnaire (13), déplaçable dans la direction de fermeture (s-s) dans et hors de la fermeture de moule, les autres pièces de l'unité de fermeture de moule (F) étant déplaçables par rapport au support de moule stationnaire (13) lors de la fermeture du moule ; et
- l'unité de fermeture de moule (F) présentant une unité d'entraînement pour le déplacement du support de moule déplaçable (12) et étant pour cela en liaison de fonctionnement avec le support de moule stationnaire (13) et, au moyen d'un élément de transmission de force, avec le support de moule déplaçable (12),
- l'unité d'entraînement (A) étant articulée à une extrémité au bâti de machine (10) ou au support de moule stationnaire (13) et reliée de manière articulée, à une autre extrémité, à une plaque d'appui (14) déplaçable dans la direction de fermeture (s-s) et reliée à l'élément de transmission de force,
**caractérisée en ce que** l'élément de transmission de force est constitué d'au moins un arceau (15) séparé, déformable par la force, essentiellement lorsque le moule (M) est fermé.

2. Machine de moulage par injection selon la revendication 1, **caractérisée en ce que** le bâti de machine forme sur une surface horizontale le support de moule stationnaire (13) pour une unité de fermeture de moule (F) travaillant verticalement.

3. Machine de moulage par injection selon la revendication 1, **caractérisée en ce que** la direction de fermeture (s-s) est verticale ou horizontale.

4. Machine de moulage par injection selon l'une des revendications précédentes, **caractérisée en ce que** ledit au moins un arceau (15) est guidé autour d'un espace de serrage de moule formé entre le support de moule déplaçable (12) et le support de moule stationnaire (13).

5. Machine de moulage par injection selon l'une des revendications précédentes, **caractérisée en ce que** l'élément de transmission de force est articulé, des deux côtés d'un espace de serrage de moule formé par le support de moule déplaçable (12) et le support de moule stationnaire (13), d'un côté au support de moule déplaçable (12) et de l'autre côté à un élément de liaison (16) à la plaque d'appui (14).

6. Machine de moulage par injection selon la revendication 5, **caractérisée en ce que** la distance entre la plaque d'appui (14) et le point d'articulation (17) de l'élément de liaison (16) à l'élément de transmission de force est modifiable au moyen d'un dispositif de réglage de la hauteur du moule (18).

7. Machine de moulage par injection selon l'une des revendications précédentes, **caractérisée en ce que** le support de moule déplaçable (12) est guidé sur des éléments de guidage séparé (11) qui sont reliés au bâti de machine (10).

8. Machine de moulage par injection selon l'une des revendications précédentes, **caractérisée en ce que** les éléments de guidage (11) ayant de préférence la forme de longerons d'appui servent à la fois à la plaque d'appui (14) et/ou à l'élément de transmission de force comme guidage lors du déplacement dans la direction de fermeture (s-s).

9. Machine de moulage par injection selon l'une des revendications précédentes, **caractérisée en ce qu'**un élément de liaison (19) pour un dispositif d'entraînement (A) est suspendu de manière articulée, au moyen de deux éléments de maintien (22,23) articulés à des points d'articulation (20,21) d'un mécanisme de genouillère (Y), au support de moule stationnaire (13) et à la plaque d'appui (14), le dispositif d'entraînement (A) étant fixé aux éléments de maintien et disposé perpendiculairement à la direction de fermeture (s-s), maintenu libre en déplacement par le mécanisme de genouillère (Y) et venant en prise, au point d'articulation (25), avec un élément d'entraînement (24).

10. Machine de moulage par injection selon l'une des revendications 1 à 8, **caractérisée en ce que** l'unité d'entraînement est une unité d'entraînement hydraulique qui est fixée à la plaque d'appui (14) au moyen d'un dispositif d'ajustage (18').

11. Machine de moulage par injection selon l'une des revendications précédentes, **caractérisée en ce que** l'unité de moulage par injection (S) est reliée au support de moule déplaçable (12) en vue d'un déplacement commun.

12. Machine de moulage par injection selon l'une des revendications précédentes, **caractérisée en ce que** l'unité de moulage par injection (S') peut être amenée dans le plan de séparation entre les éléments de guidage (11) en vue de l'injection.
